# EUROPEAN PATENT SPECIFICATION

(11) **EP 1 877 656 B1**
(45) Date of publication and mention of the grant of the patent: **14.04.2010**
(21) Application number: 05815309.9
(22) Date of filing: 05.12.2005
(51) Int. Cl.: F02B 75/20, F02B 75/02

(54) **TWO-STROKE INTERNAL COMBUSTION ENGINE HAVING 15 CYLINDERS IN A SINGLE ROW**
15 ZYLINDER IN EINER EINZIGEN REIHE ENTHALTENDER ZWEITAKTVERBRENNUNGSMOTOR
MOTEUR A COMBUSTION INTERNE DEUX TEMPS AYANT 15 CYLINDRES REPARTIS SUR UNE SEULE RANGEE

(43) Date of publication of application: 16.01.2008
(73) Proprietor: MAN Diesel, filial af MAN Diesel SE, Tyskland, 2450 Copenhagen SV (DK)
(72) Inventor: HANSEN, Bo, DK-2000 Frederiksberg (DK)
(74) Representative: Indahl, Peter Jensen
(86) International application number: PCT/DK2005/000773
(87) International publication number: WO 2007/065426

(56) References cited:
- EP-A- 0 713 000
- GB-A- 322 161
- US-A- 1 869 587
- PATENT ABSTRACTS OF JAPAN vol. 2002, no. 02, 2 April 2002 (2002-04-02) & JP 2001 271653 A (MAN B & W DIESEL AS), 5 October 2001 (2001-10-05)
- PATENT ABSTRACTS OF JAPAN vol. 2003, no. 12, 5 December 2003 (2003-12-05) & JP 2004 003659 A (MAN B & W DIESEL AS), 8 January 2004 (2004-01-08)

## Description

The present invention relates to a two-stroke internal combustion engine having 15 cylinders in a single row and a crankshaft, which internal combustion engine has a firing sequence (n1 - n15) of the engine cylinders C1 to C15.

It has been suggested to provide a 15 cylinder engine with the firing sequence 1 8 15 11 4 2 9 13 10 6 3 7 14 12 5 see the INTERNET, www.manbw.com/aricle_002914.html, "Firing Sequences", edition 12.09.2003, Two - Stroke Archive 2003 (MAN Diesel). The firing sequence of an engine is important for the vibrational characteristics of the engine system. The vibrations of primary relevance are external unbalanced moments, guide force moments, torsional vibrations in the shafting system and axial vibrations in the shafting system.

The vibrations are to a large extent caused by the inertia forces on the moving masses and gas forces acting on the pistons when the engine is running. These forces on an individual piston vary in time during one revolution of the engine. And all pistons with associated moving parts, like piston rod, crosshead, connecting rod and crankshaft throw, in the engine contribute to the resulting pattern of vibrations. The individual piston has a certain location in the engine, such as cylinder No. 4 (and the cylinder is then called C4), and this location is of cause a fixed location for a given engine. However, the mutual timing of the movements of the pistons can be varied at the design stage of the engine by changing the firing sequence. The firing sequence decides for every cylinder in the engine when a given cylinder is to fire during one engine revolution.

Computer programs have been developed in order to calculate possible firing sequences. These computer programs are based on try-and-error calculations where the different even firing sequences are calculated one after the other, and for each firing sequence vector summations are calculated for the force contributions from all cylinders. For in-line two-stroke engines of up to 12 cylinders these programs have been able to cope with the amount of calculations to be carried out. When, however, the number of cylinders is increased, it becomes increasingly difficult to carry out the calculations.

For an engine with 15 cylinders the number of possible even firing orders is about 87.000.000.000, and even for the most powerful of current computers the full computations cannot be performed within an acceptable time span. It is consequently required that a selection is made among the vast number of possibilities.

The object of the present invention is to improve vibration conditions of the 15 cylinder in-line engine.

In view of this, the two-stroke internal combustion engine having 15 cylinders is according to the present invention characterized in that the crankshaft is built in three sections assembled in extension of one another, that a first crankshaft section of said three sections is associated with a first plurality of engine cylinders including engine cylinder C1, a second crankshaft section of said three sections is associated with a second plurality of engine cylinders including engine cylinder C8 and a third crankshaft section of said three sections is associated with a third plurality of engine cylinders including engine cylinder C15, and that the firing sequence (n1 - n15) of the fifteen cylinders includes at least the following five groups of mutually different cylinders:
1) a first group of only two consecutively firing cylinders from said first plurality of engine cylinders,
2) a second group of only two consecutively firing cylinders from a single one of said first plurality, said second plurality or said third plurality of engine cylinders,
3) a third group of only two consecutively firing cylinders from a single one of said first plurality, said second plurality or said third plurality of engine cylinders,
4) a fourth group of either
   only two consecutively firing cylinders from a single one of said first plurality, said second plurality or said third plurality of engine cylinders, or
   three consecutively firing cylinders of which the first and the third firing cylinder are from a single one of said first plurality, said second plurality or said third plurality of engine cylinders, and the second firing cylinder is from either the same plurality of engine cylinders as the first and third firing cylinder or from one of the other pluralities of cylinders, and
5) a fifth group of either
   only two consecutively firing cylinders from a single one of said first plurality, said second plurality or said third plurality of engine cylinders, or
   three consecutively firing cylinders of which the first and the third firing cylinder are from a single one of said first plurality, said second plurality or said third plurality of engine cylinders, and the second firing cylinder is from either the same plurality of engine cylinders as the first and third firing cylinder or from one of the other pluralities of cylinders.

The division of the crankshaft into three sections has considerable impact on the vibrational behaviour of the engine because the distance between the cylinders in the engine is larger at the location of the division of the crankshaft. The larger distance is required in order to make room for assembly flanges and double main bearings between the neighbouring cylinders. The additional distance can e.g. amount to about 70% of the normal distance between cylinders. A consequence of dividing the crankshaft is the disadvantage of a larger resulting overall length of the engine. With a crankshaft divided in three, the two divisions cause an increase in engine length corresponding to more than one cylinder.

The firing sequences according to the first aspect of the present invention are all seen to include at least three groups of two consecutively firing cylinders and possibly one or two further groups of at least two consecutively firing cylinders or one or two groups of three consecutively firing cylinders. From 10 to 12 out of the 15 cylinders are thus clearly grouped and only very few out of the possible even firing sequences for the 15 cylinder engine exhibit this grouping of cylinders. When a specific engine is to be built it is consequently possible to find acceptable firing sequences by calculation because the calculations can be performed only on the firing sequences fulfilling the mentioned grouping of cylinders. Optimum firing sequences for any specific application can thus be found.

It has surprisingly turned out that the firing sequences found by the applicant with the mentioned grouping have quite acceptable vibration levels. Some of the firing sequences do require the use of a vibration damper to counteract and/or dampen one of the vibration modes, and others do not, but all of them seem to be suitable for use in actual engines.

In an embodiment the first plurality of engine cylinders associated with the first crankshaft section consists of engine cylinders C1 to C5; the second plurality of engine cylinders associated with the second crankshaft section consists of engine cylinders C6 to C10; the third plurality of engine cylinders associated with the third crankshaft section consists of engine cylinders C11 to C15; and the third group of only two consecutively firing cylinders is from the second plurality of engine cylinders or from the third plurality of engine cylinders. In this embodiment the three sections of the crankshaft are associated with an equal number of the engine cylinders, namely five cylinders each, and up to two of the groups of consecutively firing cylinders are all from the first plurality of engine cylinders.

In an alternative embodiment of the present invention the first plurality of engine cylinders associated with the first crankshaft section consists of engine cylinders C1 to C6; the second plurality of engine cylinders associated with the second crankshaft section consists of engine cylinders C7 to C11; the third plurality of engine cylinders associated with the third crankshaft section consists of engine cylinders C12 to C15; and the third group of two consecutively firing cylinders is from the first plurality of engine cylinders or from the third plurality of engine cylinders. With this grouping, up to three of the groups of consecutively firing cylinders are all from the first plurality of engine cylinders, and the crankshaft has been divided in unequal lengths with the longest section associated with cylinder C1. When C1 is located at the free end of the engine (opposite the connection to the driven shaft) this brings the advantage that the least heavily loaded section of the crankshaft has the longest length, and the most heavily loaded third crankshaft section has the shortest length. This more heavily loaded third crankshaft section can thus be given larger shaft thickness etc. without being of a larger weight than the first crankshaft section.

Preferably, the second group is of two consecutively firing cylinders from the first plurality of engine cylinders or from the second plurality of engine cylinders. Out of these two pluralities it is preferred that the second group is from the first plurality of engine cylinders.

In case the crankshaft is divided in the cylinder ratio of 6-5-4 as indicated in the above, it is possible to utilize a firing sequence in which the fifth group consists of either three consecutively firing cylinders from the first plurality of engine cylinders or three consecutively firing cylinders from the second plurality of engine cylinders.

If the firing sequence has none or only a single pair of consecutively firing cylinders from the second plurality of engine cylinders it is preferred that the firing sequence includes a fourth group in which the first and the third firing cylinder are from the second plurality of engine cylinders and the second firing cylinder is from either the first plurality of engine cylinders or from the third plurality of engine cylinders. In this manner the firing sequence is made comparatively well balanced despite the lack of the pair of consecutively firing cylinders from the second plurality of engine cylinders.

In a further embodiment the fourth group is two consecutively firing cylinders from either the second plurality of engine cylinders or from the third plurality of engine cylinders. This provides the firing sequence with a rather large number of two consecutively firing cylinders from the plurality of cylinders, and the running conditions of the engine are improved.

In an embodiment the fifth group has three consecutively firing cylinders of which one or two are from the second plurality of engine cylinders. This detail in the firing sequence is in particular useful when the other groups of the firing order comprise three or four pairs of consecutively firing cylinders from the first plurality of engine cylinders and from the third plurality of engine cylinders.

In order to diminish the vibration levels it is preferred that the fifth group has two consecutively firing cylinders from the third plurality of engine cylinders. With this grouping there are several groups of two cylinders from the two end crankshaft sections (first and third section). This provides a balanced distribution of the forces acting on the engine pistons.

In a preferred embodiment the first six cylinders in the firing sequence are two cylinders from the first plurality of engine cylinders followed by two cylinders from the third plurality of engine cylinders followed by one cylinder from the second plurality of engine cylinders followed by one cylinder from the first plurality of engine cylinders. This pattern of firings results in low vibration levels.

In another preferred embodiment due to the low levels of resulting vibration, the first two cylinders in the firing sequence are two cylinders from the first plurality of engine cylinders, and the five last cylinders in the firing sequence are two cylinders from the first plurality of engine cylinders followed by one cylinder from the second plurality of engine cylinders followed by one cylinder from the third plurality of engine cylinders followed by one cylinder from the second plurality of engine cylinders.

In yet another embodiment there are at the most two of the groups that have two consecutively firing cylinders from the first plurality of engine cylinders.

In an embodiment none of the groups in the firing sequence includes three consecutively firing cylinders from a single one of said first plurality, said second plurality or said third plurality of engine cylinders.

The firing sequence can be both an even sequence and an uneven sequence. When the firing sequence is even the turning angle of the crankshaft between the firing of any two consecutive cylinders is 360°/15. This fixed size angle applies to all cylinders in the engine when the firing sequence is even. And the even sequences are utilized when the desire is to find acceptable firing sequences. When acceptable firing sequences have been found it is possible to investigate whether even better vibration characteristics can be obtained by utilizing uneven firing sequences. This can be considered as a fine-tuning of the vibration pattern. An uneven firing sequence is a sequence in which the turning angle of the crankshaft between the firing of at least two pairs of consecutively firing cylinders is different from 360°/15.

Examples of embodiments of the present invention are described in more detail in the following with reference to the highly schematic drawings, on which
Fig. 1 is a sectional view of a two-stroke engine with 15 cylinders according to the present invention,
Fig. 2 is a side view of the engine in Fig. 1, and
Fig. 3 is an illustration of a firing sequence for the cylinders pertaining to the engine of Fig. 1.

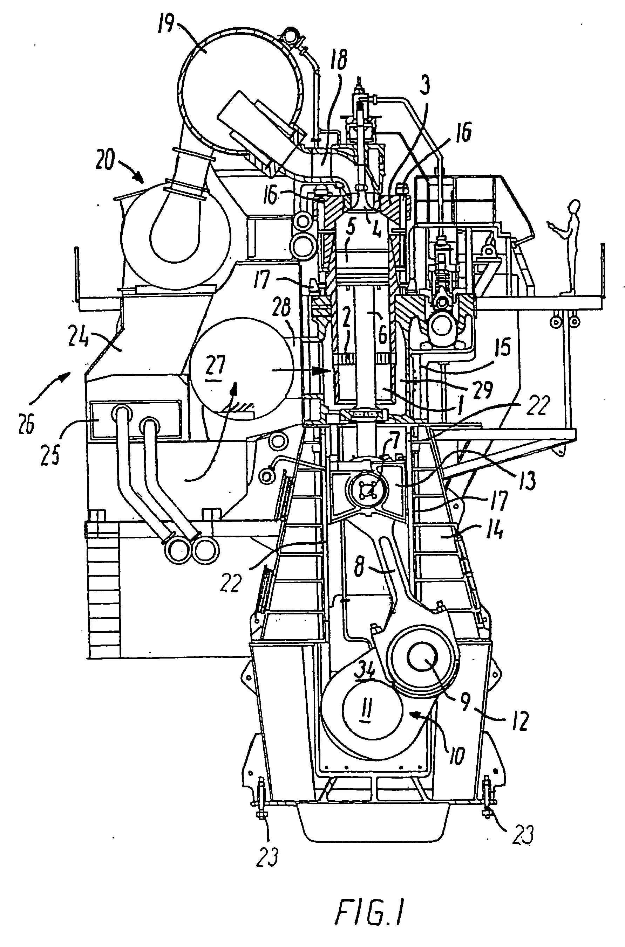

In Fig. 1 is seen the cross-section through a large two-stroke turbocharged internal combustion engine of the crosshead type, having 15 cylinders. The engine can e.g. be of the make MAN B&W Diesel and the type MC or ME, or of the make Wärtsilä of the type Sulzer RT-flex or Sulzer RTA or of the make Mitsubishi Heavy Industries. The cylinders can e.g. have a bore in the range of e.g. 60 to 120 cm, preferably from 80 to 120 cm, and more preferably from 95 to 120 cm. The engine can e.g. have a power in the range of 3000 to 8500 kW per cylinder, preferably from 4000 to 8000 kW, such as at least 5.000 kW per cylinder. Each cylinder C1-C15 typically has a cylinder liner 1 with a row of scavenge air ports 2 in its lower end and a cylinder cover 3 with an exhaust valve 4 located in the top of the cylinder.

A piston 5 is mounted on a piston rod 6, and the piston rod 6 is connected with a crank pin 9 on a crankshaft 10 via a crosshead 7 and a connecting rod 8. The crankshaft journal 11 is located in a main bearing mounted in a bedplate 12.

The crosshead is supported in the transverse direction by guide shoes 13 sliding on vertically extending guide planes 22 extending in the vertical direction from the top towards the bottom of the engine frame 14. The guide planes are fixed to the engine frame 14, and the engine frame is fixed to the top of the bedplate 12. Foundation bolts 23 fix bedplate 12 to an engine foundation (not shown). The engine foundation is part of the ship hull in case the engine is a main propulsion engine in a ship, or is part of a building structure in case the engine is a stationary engine in a power plant. External forces and moments caused by vibrations in the engine are transferred to the engine foundation and possibly also to other structures, such as walls or a hull side. A cylinder section 15 is mounted on top of the engine frame.

The cylinder cover 3 is fixed to the cylinder section by cover studs 16. Tie-rods 17 extend from the cylinder section down to the bedplate and they fix the cylinder section 15 to the bedplate 12. There are typically four tie-rods 17 acting on each cylinder section, and the sum of the downward forces from the tie-rods exceeds the upward directed force on the cylinder cover caused by the maximum pressure developed by the combustion in the combustion chamber in the cylinder.

An exhaust gas duct 18 extends from the individual cylinder in the area of the exhaust valve and opens out into an exhaust gas receiver 19 that is common to a number of cylinders. The engine may have only a single exhaust gas receiver which is common to all cylinders, or it can have a plurality of exhaust gas receivers, such as two or three, located end-to-end in extension of each other and typically interconnected through gas flow passages 19'.

The exhaust gas receiver is a pressure vessel with a circular cylindrical cross-section. The exhaust gas duct 18 is extending into the exhaust receiver 19 and delivers the exhaust gas from the pertaining combustion chamber when the exhaust valve is open. In the exhaust gas receiver pressure variations caused by the exhaust gas pulses emitted from the exhaust gas ducts are equalized to a more even pressure.

A plurality of turbochargers 20 are connected to the exhaust gas receiver 19 and deliver compressed air via an air flow passage 24 and possibly an inlet air cooler 25 to a scavenge air system 26 comprising at scavenge air receiver 27 and flow passages 28 to an inlet air chamber 29 at scavenge air ports 2.

The crankshaft can be made in a single section or it can be manufactured in several sections that are joined into a complete crankshaft at the assembly of the engine. If the crankshaft is of a single section the distance I between the cylinders in the engine is constant through out the crankshaft. However, the crankshaft for an engine of the kind pertaining to the present invention is typically divided into sections that are assembled into a unified crankshaft. The division of the crankshaft into several parts can e.g. be caused by a desire to adjust the weight of the individual crankshaft section to be less than the maximum lifting capacity of the crane utilized for handling the crankshaft section. The lifting capacity of such a crane can e.g. be 250 t. The crankshaft is typically divided into three sections, but it can alternatively be divided into two sections or more than three sections. In the following examples of embodiments it is assumed that the cylinders in the engine can be associated with three crankshaft sections, whether the crankshaft is actually divided into sections or not.

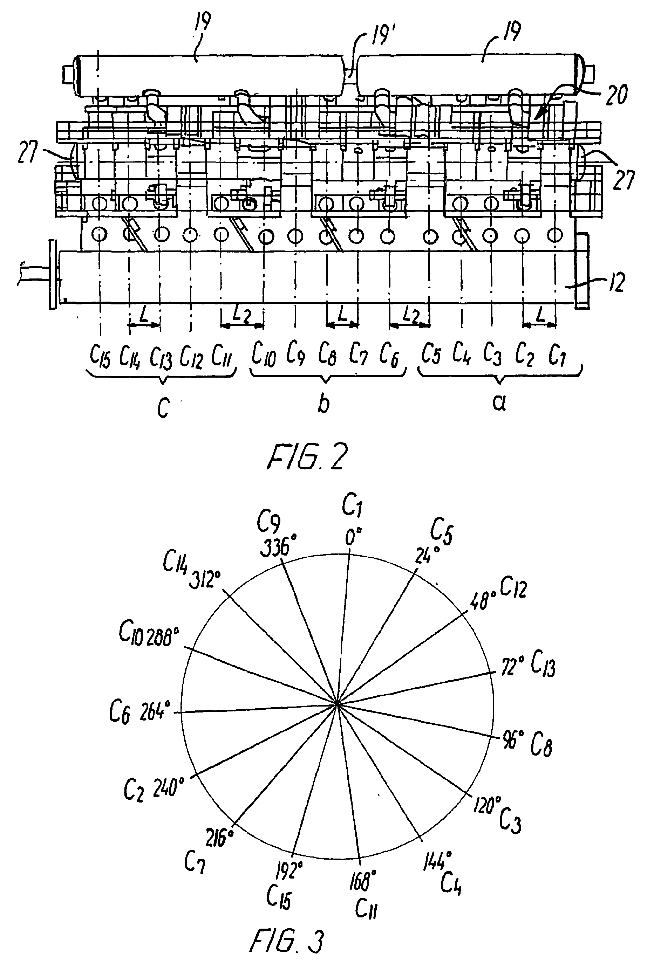

In the side view illustration of the embodiment of the engine presented in Fig. 2 the crankshaft is divided between cylinders C5-C6 and C10-C11 so that cylinders C1, C2, C3, C4 and C5 are associated with a first crankshaft section and are considered to be a first plurality of engine cylinders a, cylinders C6, C7, C8, C9 and C10 are associated with a second crankshaft section and are considered to be a second plurality of engine cylinders b, and cylinders C11, C12, C13, C14 and C15 are associated with a third crankshaft section and are considered to be a third plurality of engine cylinders c. The crankshaft has consequently been divided in the cylinder ratio of 5-5-5. This is called an even division. In an alternative division of the crankshaft the crankshaft is divided between cylinders C6-C7 and C11-C12 so that cylinders C1 to C6 are associated with a first crankshaft section and are considered to be a first plurality of engine cylinders a, cylinders C7 to C11 are associated with a second crankshaft section and are considered to be a second plurality of engine cylinders b, and cylinders C12 to C15 are associated with a third crankshaft section and are considered to be a third plurality of engine cylinders c. The crankshaft has consequently been divided in the cylinder ratio of 6-5-4. This is called an uneven division. Both examples of cylinder ratios are applicable to the present invention.

The ordinary distance between cylinders is L. In between the groups the distance can be the larger distance L2 illustrated in Fig. 2. The distance L2 = L + l1. This is the normal distance between cylinders plus an additional length l1 caused by the presence of two main bearings and an intermediate crankshaft joint, such as a flange connection where two crankshaft sections are joined by bolting or by another suitable joining method.

An important feature of the present invention is the grouping of the cylinders in the actual firing sequences. The concepts of the grouping of the cylinders according to the first aspect of the present invention are presented in the below Tables 1 and 2. Table 1 and the firing sequences mentioned thereafter relate to an embodiment of the engine in which the crankshaft has the uneven division in the cylinder ratio of 6-5-4. In Table 1 the first plurality of engine cylinders C1, C2, C3, C4, C5 and C6 are labelled a, the second plurality of engine cylinders C7, C8, C9, C10 and C11 are labelled b, and the third plurality of engine cylinders C12, C13, C14 and C15 are labelled c. So if the table mentions e.g. bcb in a group that group has three consecutively firing cylinders of which the first and the third firing cylinder are from the second plurality of engine cylinders and the second firing cylinder is from the third plurality of engine cylinders.

**Table 1**

| (Uneven division of the crankshaft sections 6-5-4) | | | | | | | | | | | |
|---|---|---|---|---|---|---|---|---|---|---|---|
| | Grouped cylinders | | | | | | | | | | |
| Group 1 | aa | aa | aa | aa | aa | aa | aa | aa | aa | aa | aa |
| Group 2 | aa | aa | aa | aa | aa | aa | aa | aa | aa | bb | bb |
| Group 3 | aa | aa | aa | aa | aa | aa | aa | cc | cc | cc | cc |
| Group 4 | bb | bb | bb | bcb | bcb | bcb | bcb | aba | bcb | bcb | bb |
| Group 5 | cc | bb | bcb | bcb | bcb | bcb | bbb | bcb | aba | aaa | aaa |
| Group 6 | | cc | cc | cc | cc | cbc | cc | bcb | | | |
| Group 7 | | | | bb | | | | | | | |

Based on these groups according to the present invention calculations, have been made in order to establish actual firing sequences. An extract of the firing sequences are shown in the following listing of Sequences A, in which the "C"'s have been omitted so that the listing corresponds to the traditional manner of listing firing sequences. 1-15 in order words correspond to C1-C15.

### Sequences A:

1) 1-5-12-14-6-3-7-9-13-10-2-4-11-15-8
2) 1-8-15-11-4-2-10-13-9-7-3-6-14-12-5
3) 1-6-11-14-8-2-4-12-15-5-3-7-10-13-9
4) 1-9-13-10-7-3-5-15-12-4-2-8-14-11-6
5) 1-3-13-15-5-2-8-11-12-7-4-6-9-14-10
6) 1-10-14-9-6-4-7-12-11-8-2-5-15-13-3
7) 1-4-12-14-7-2-5-13-11-8-6-3-9-15-10
8) 1-10-15-9-3-6-8-11-13-5-2-7-14-12-4
9) 1-4-12-14-7-2-5-13-11-8-6-3-10-15-9
10) 1-9-15-10-3-6-8-11-13-5-2-7-14-12-4
11) 1-4-12-14-7-2-6-11-13-8-3-5-10-15-9
12) 1-9-15-10-5-3-8-13-11-6-2-7-14-12-4
13) 1-4-12-14-7-2-6-11-13-8-5-3-10-15-9
14) 1-9-15-10-3-5-8-13-11-6-2-7-14-12-4
15) 1-4-12-15-6-2-7-10-13-8-3-5-11-14-9
16) 1-9-14-11-5-3-8-13-10-7-2-6-15-12-4
17) 1-4-13-15-5-2-7-11-12-8-3-6-10-14-9
18) 1-9-14-10-6-3-8-12-11-7-2-5-15-13-4
19) 1-5-11-15-8-2-4-12-14-6-3-7-9-13-10
20) 1-10-13-9-7-3-6-14-12-4-2-8-15-11-5
21) 1-6-11-13-9-2-4-12-14-7-3-5-10-15-8
22) 1-8-15-10-5-3-7-14-12-4-2-9-13-11-6
23) 1-5-13-12-7-3-6-10-14-9-2-4-11-15-8
24) 1-8-15-11-4-2-9-14-10-6-3-7-12-13-5
25) 1-3-12-14-7-4-5-9-15-8-2-6-10-13-11
26) 1-11-13-10-6-2-8-15-9-5-4-7-14-12-3
27) 1-5-12-11-8-7-4-6-14-13-2-3-9-15-10
28) 1-10-15-9-3-2-13-14-6-4-7-8-11-12-5
29) 1-4-13-14-6-2-7-11-12-8-5-3-10-15-9
30) 1-9-15-10-3-5-8-12-11-7-2-6-14-13-4
31) 1-2-14-15-5-3-7-10-12-8-4-6-9-13-11
32) 1-11-13-9-6-4-8-12-10-7-3-5-15-14-2
33) 1-2-13-14-7-3-6-10-12-9-5-4-8-15-11
34) 1-11-15-8-4-5-9-12-10-6-3-7-14-13-2
35) 1-2-11-15-8-3-6-9-12-10-5-4-7-14-13
36) 1-13-14-7-4-5-10-12-9-6-3-8-15-11-2
37) 1-3-12-13-7-6-4-8-14-10-5-2-9-15-11
38) 1-11-15-9-2-5-10-14-8-4-6-7-13-12-3
39) 1-4-13-12-7-6-3-10-15-8-2-5-11-14-9
40) 1-9-14-11-5-2-8-15-10-3-6-7-12-13-4
41) 1-6-15-13-2-3-9-14-10-4-5-8-11-12-7
42) 1-7-12-11-8-5-4-10-14-9-3-2-13-15-6
43) 1-6-15-13-3-2-9-14-10-4-5-8-11-12-7
44) 1-7-12-11-8-5-4-10-14-9-2-3-13-15-6
45) 1-2-11-13-9-6-4-8-12-10-7-3-5-15-14
46) 1-14-15-5-3-7-10-12-8-4-6-9-13-11-2
47) 1-6-13-11-8-5-4-10-14-9-3-2-12-15-7
48) 1-7-15-12-2-3-9-14-10-4-5-8-11-13-6
49) 1-4-14-13-6-2-7-12-10-9-5-3-11-15-8
50) 1-8-15-11-3-5-9-10-12-7-2-6-13-14-4
51) 1-3-13-12-7-6-4-8-14-10-5-2-9-15-11
52) 1-11-15-9-2-5-10-14-8-4-6-7-12-13-3
53) 1-5-11-14-9-2-3-13-12-7-6-4-8-15-10
54) 1-10-15-8-4-6-7-12-13-3-2-9-14-11-5
55) 1-4-13-12-7-5-3-11-15-8-2-6-9-14-10
56) 1-10-14-9-6-2-8-15-11-3-5-7-12-13-4
57) 1-2-14-12-7-6-3-10-13-9-5-4-8-15-11
58) 1-11-15-8-4-5-9-13-10-3-6-7-12-14-2
59) 1-2-15-14-5-3-7-10-12-8-4-6-9-13-11
60) 1-11-13-9-6-4-8-12-10-7-3-5-14-15-2
61) 1-3-11-14-9-2-6-10-12-8-7-4-5-15-13
62) 1-13-15-5-4-7-8-12-10-6-2-9-14-11-3
63) 1-5-14-11-6-7-4-8-15-10-2-3-12-13-9
64) 1-9-13-12-3-2-10-15-8-4-7-6-11-14-5
65) 1-4-12-13-8-5-2-11-15-7-3-6-9-14-10
66) 1-10-14-9-6-3-7-15-11-2-5-8-13-12-4
67) 1-6-15-13-3-2-9-14-10-5-4-8-11-12-7
68) 1-7-12-11-8-4-5-10-14-9-2-3-13-15-6
69) 1-2-13-14-7-3-6-10-12-9-4-5-8-15-11
70) 1-11-15-8-5-4-9-12-10-6-3-7-14-13-2
71) 1-2-11-14-9-4-5-8-12-10-7-3-6-15-13
72) 1-13-15-6-3-7-10-12-8-5-4-9-14-11-2
73) 1-3-14-13-7-2-6-12-11-8-5-4-10-15-9
74) 1-9-15-10-4-5-8-11-12-6-2-7-13-14-3
75) 1-5-12-13-7-3-6-10-14-9-2-4-11-15-8
76) 1-8-15-11-4-2-9-14-10-6-3-7-13-12-5
77) 1-2-14-13-7-4-5-10-12-9-6-3-8-15-11
78) 1-11-15-8-3-6-9-12-10-5-4-7-13-14-2
79) 1-4-13-14-6-2-7-12-10-9-5-3-11-15-8
80) 1-8-15-11-3-5-9-10-12-7-2-6-14-13-4
81) 1-5-15-13-3-2-9-14-10-4-6-7-11-12-8
82) 1-8-12-11-7-6-4-10-14-9-2-3-13-15-5
83) 1-3-15-13-6-2-7-12-10-8-5-4-11-14-9
84) 1-9-14-11-4-5-8-10-12-7-2-6-13-15-3
85) 1-6-13-11-8-5-4-10-14-9-2-3-12-15-7
86) 1-7-15-12-3-2-9-14-10-4-5-8-11-13-6
87) 1-5-15-13-3-4-10-8-12-9-2-6-11-14-7
88) 1-7-14-11-6-2-9-12-8-10-4-3-13-15-5
89) 1-4-13-14-6-2-7-12-9-10-5-3-11-15-8
90) 1-8-15-11-3-5-10-9-12-7-2-6-14-13-4
91) 1-3-12-14-8-2-6-10-13-9-4-5-7-15-11
92) 1-11-15-7-5-4-9-13-10-6-2-8-14-12-3
93) 1-6-13-14-4-3-8-10-12-9-2-5-11-15-7
94) 1-7-15-11-5-2-9-12-10-8-3-4-14-13-6
95) 1-2-14-12-7-6-4-9-13-10-5-3-8-15-11
96) 1-11-15-8-3-5-10-13-9-4-6-7-12-14-2
97) 1-5-12-13-7-3-6-9-14-10-2-4-11-15-8
98) 1-8-15-11-4-2-10-14-9-6-3-7-13-12-5
99) 1-5-15-14-2-3-9-12-11-6-4-7-10-13-8
100) 1-8-13-10-7-4-6-11-12-9-3-2-14-15-5
101) 1-3-12-13-7-6-4-8-15-10-2-5-9-14-11
102) 1-11-14-9-5-2-10-15-8-4-6-7-13-12-3
103) 1-6-13-11-8-5-4-9-14-10-3-2-12-15-7
104) 1-7-15-12-2-3-10-14-9-4-5-8-11-13-6
105) 1-2-13-14-6-4-7-8-12-10-5-3-9-15-11
106) 1-11-15-9-3-5-10-12-8-7-4-6-14-13-2
107) 1-2-14-15-4-3-8-10-12-7-5-6-9-13-11
108) 1-11-13-9-6-5-7-12-10-8-3-4-15-14-2
109) 1-5-15-14-2-3-9-12-10-7-4-6-11-13-8
110) 1-8-13-11-6-4-7-10-12-9-3-2-14-15-5
111) 1-3-11-15-8-2-6-10-13-9-5-4-7-14-12
112) 1-12-14-7-4-5-9-13-10-6-2-8-15-11-3
113) 1-2-11-13-9-4-6-8-12-10-7-3-5-15-14
114) 1-14-15-5-3-7-10-12-8-6-4-9-13-11-2
115) 1-4-14-13-6-2-7-12-9-10-5-3-11-15-8
116) 1-8-15-11-3-5-10-9-12-7-2-6-13-14-4
117) 1-3-15-14-5-2-7-13-11-6-4-8-9-12-10
118) 1-10-12-9-8-4-6-11-13-7-2-5-14-15-3
119) 1-6-9-13-11-3-2-12-14-7-4-5-8-15-10
120) 1-10-15-8-5-4-7-14-12-2-3-11-13-9-6
121) 1-3-13-12-6-7-4-8-14-10-5-2-9-15-11
122) 1-11-15-9-2-5-10-14-8-4-7-6-12-13-3
123) 1-5-12-13-8-3-4-11-15-7-2-6-10-14-9
124) 1-9-14-10-6-2-7-15-11-4-3-8-13-12-5
125) 1-3-13-14-7-2-6-11-12-8-5-4-9-15-10
126) 1-10-15-9-4-5-8-12-11-6-2-7-14-13-3
127) 1-6-14-13-4-2-7-15-11-3-5-9-10-12-8
128) 1-8-12-10-9-5-3-11-15-7-2-4-13-14-6
129) 1-2-15-14-4-3-8-10-12-7-5-6-9-13-11
130) 1-11-13-9-6-5-7-12-10-8-3-4-14-15-2
131) 1-8-12-14-2-4-7-15-10-5-3-9-11-13-6
132) 1-6-13-11-9-3-5-10-15-7-4-2-14-12-8
133) 1-7-10-14-8-2-4-12-15-6-3-5-13-11-9
134) 1-9-11-13-5-3-6-15-12-4-2-8-14-10-7
135) 1-6-8-15-10-2-4-11-14-7-5-3-13-9-12
136) 1-12-9-13-3-5-7-14-11-4-2-10-15-8-6
137) 1-6-7-15-11-2-4-10-14-8-5-3-12-9-13
138) 1-13-9-12-3-5-8-14-10-4-2-11-15-7-6
139) 1-14-12-9-2-5-11-13-7-6-3-10-15-8-4
140) 1-4-8-15-10-3-6-7-13-11-5-2-9-12-14
141) 1-6-7-15-10-4-2-11-14-8-5-3-12-9-13
142) 1-13-9-12-3-5-8-14-11-2-4-10-15-7-6
143) 1-9-12-14-2-4-7-15-10-5-3-8-13-11-6
144) 1-6-11-13-8-3-5-10-15-7-4-2-14-12-9

With respect to the grouping we illustrate this in detail with the firing sequence 1 5 12 14 6 3 7 9 13 10 2 4 11 15 8. The firing number is replaced with the labels a, b or c applicable to the cylinder, resulting in the following a a c c a a b b c b a a b c b. This particular firing sequence thus has the following groups aa, cc, aa, bb, aa and bcb. When these groups are compared with Table 1 it appears that these groups are listed in the third column, and that Group 1 = aa, Group 2 = aa, Group 3 = aa, Group 4 = bb, Group 5 = bcb, and Group 6 = cc. The numbering of these groups does not indicate anything about the sequence of the groups, so cc is allocated to Group 6 even though cc appears immediately after the first group of aa. When the actual sequence of the cylinders is taken into consideration in addition to the grouping of the cylinders it appears that the first two cylinders in the firing sequence are two cylinders from the first plurality of engine cylinders, and that the five last cylinders in the firing sequence are two cylinders from the first plurality of engine cylinders followed by one cylinder from the second plurality of engine cylinders followed by one cylinder from the third plurality of engine cylinders followed by one cylinder from the second plurality of engine cylinders.

To give another example, the firing sequence listed as No. 144 is the following 1 6 11 13 8 3 5 10 15 7 4 2 14 12 9. This corresponds to a a b c b a a b c b a a c c b and to the groups aa, bcb, aa, bcb, aa, and cc. These groups are listed in the 5th column of Table 1, and thus Group 1 = aa, Group 2 = aa, Group 3 = aa, Group 4 = bcb, Group 5 = bcb, and Group 6 = cc.

The actual level of vibrations of course depends on the actual engine. Calculations have been made for an engine of the type K98ME, viz. a MAN B&W Diesel engine having a cylinder bore of 0.98 m and electronic control of exhaust valves and of fuel injection. The nominal distance between the cylinders is L = 1.750 m, and the distance between cylinders C6 and C7 and between cylinders C11 and C12 is L2 = 2.99 m. This engine has a nominal power of 93.450 kW at 100% engine load.

For a given firing sequence a so-called harmonic analysis is performed in order to obtain values for the various resulting vibration levels caused by the excitation sources in the engine. The harmonic analysis involves a summation of the individual harmonic contributions. The harmonic analysis can be performed electronically by a computer program such as PROFIR developed by MAN B&W Diesel or such as a textbook program as disclosed in "Die Verbrennungskraftmaschine" of H. Maass/H. Klier and K.E. Hafner/H. Maass, published by Springer-Verlag, Wien, New York. The result of the harmonic analysis is a series of values indicative of the resulting vibration level. The below List A shows the values calculated for the firing sequences mentioned in Sequences A. The columns refer to the following vibration values: E1 indicates 1^{st} order balancing; E2 indicates 2^{nd} order balancing; X4 indicates 4^{th} order X-vector summation; X5 indicates 5^{th} order X-vector summation; X6 indicates 6^{th} order X-vector summation and X7 indicates 7^{th} order X-vector summation. The values found at the harmonic analysis are representative for the vibration level. For an actual engine it is possible to multiply the values found with a correlation factor and obtain an actual value of the excitation sources. This is commonplace to the skilled person, and to give an example relating to the particular engine K98ME the value E1 = 0.200 corresponds to a free moment of 409 kNm. The actual vibration levels are lower when the values in list A are smaller, and vice versa.

### List A:

| | E1 | E2 | X4 | X5 | X6 | X7 |
|---|---|---|---|---|---|---|
| 1) | 0.200 | 0.564 | 1.733 | 0.838 | 0.842 | 0.041 |
| 2) | 0.200 | 0.564 | 1.733 | 0.838 | 0.842 | 0.041 |
| 3) | 0.259 | 0.890 | 1.141 | 1.370 | 0.885 | 0.458 |
| 4) | 0.259 | 0.890 | 1.141 | 1.370 | 0.885 | 0.458 |
| 5) | 0.449 | 1.112 | 2.441 | 0.838 | 0.743 | 0.134 |
| 6) | 0.449 | 1.112 x | 2.441 | 0.838 | 0.743 | 0.134 |
| 7) | 0.406 | 1.067 | 2.096 | 1.071 | 0.518 | 0.392 |
| 8) | 0.406 | 1.067 | 2.096 | 1.071 | 0.518 | 0.392 |
| 9) | 0.514 | 0.640 | 1.866 | 1.071 | 0.648 | 0.340 |
| 10) | 0.514 | 0.640 | 1.866 | 1.071 | 0.648 | 0.340 |
| 11) | 0.487 | 0.767 | 1.155 | 0.308 | 0.502 | 0.200 |
| 12) | 0.487 | 0.767 | 1.155 | 0.308 | 0.502 | 0.200 |
| 13) | 0.534 | 0.911 | 1.520 | 0.352 | 0.361 | 0.455 |
| 14) | 0.534 | 0.911 | 1.520 | 0.352 | 0.361 | 0.455 |
| 15) | 0.560 | 0.898 | 1.454 | 0.776 | 0.740 | 0.321 |
| 16) | 0.560 | 0.898 | 1.454 | 0.776 | 0.740 | 0.321 |
| 17) | 0.568 | 0.848 | 1.878 | 0.776 | 0.652 | 0.223 |
| 18) | 0.568 | 0.848 | 1.878 | 0.776 | 0.652 | 0.223 |
| 19) | 0.704 | 1.531 | 1.406 | 1.205 | 0.842 | 0.487 |
| 20) | 0.704 | 1.531 | 1.406 | 1.205 | 0.842 | 0.487 |
| 21) | 0.709 | 0.709 | 0.092 | 1.204 | 0.502 | 0.092 |
| 22) | 0.709 | 0.709 | 0.092 | 1.204 | 0.502 | 0.092 |
| 23) | 0.072 | 1.393 | 1.343 | 0.481 | 0.312 | 0.456 |
| 24) | 0.072 | 1.393 | 1.343 | 0.481 | 0.312 | 0.456 |
| 25) | 0.075 | 1.600 | 0.654 | 1.709 | 0.546 | 0.251 |
| 26) | 0.075 | 1.600 | 0.654 | 1.709 | 0.546 | 0.251 |
| 27) | 0.109 | 1.557 | 2.907 | 1.430 | 0.521 | 0.410 |
| 28) | 0.109 | 1.557 | 2.907 | 1.430 | 0.521 | 0.410 |
| 29) | 0.133 | 1.545 | 2.207 | 0.113 | 0.372 | 0.416 |
| 30) | 0.133 | 1.545 | 2.207 | 0.113 | 0.372 | 0.416 |
| 31) | 0.166 | 1.493 | 2.494 | 1.510 | 0.306 | 0.048 |
| 32) | 0.166 | 1.493 | 2.494 | 1.510 | 0.306 | 0.048 |
| 33) | 0.177 | 1.174 | 2.265 | 0.685 | 0.105 | 0.334 |
| 34) | 0.177 | 1.174 | 2.265 | 0.685 | 0.105 | 0.334 |
| 35) | 0.177 | 1.174 | 2.265 | 0.685 | 0.737 | 0.334 |
| 36) | 0.177 | 1.174 | 2.265 | 0.685 | 0.737 | 0.334 |
| 37) | 0.180 | 0.422 | 1.901 | 1.071 | 0.604 | 0.392 |
| 38) | 0.180 | 0.422 | 1.901 | 1.071 | 0.604 | 0.392 |
| 39) | 0.194 | 1.401 | 0.976 | 1.664 | 0.458 | 0.187 |
| 40) | 0.194 | 1.401 | 0.976 | 1.664 | 0.458 | 0.187 |
| 41) | 0.209 | 1.018 | 2.429 | 0.685 | 0.499 | 0.389 |
| 42) | 0.209 | 1.018 | 2.429 | 0.685 | 0.499 | 0.389 |
| 43) | 0.255 | 0.965 | 2.397 | 0.531 | 0.254 | 0.132 |
| 44) | 0.255 | 0.965 | 2.397 | 0.531 | 0.254 | 0.132 |
| 45) | 0.270 | 0.904 | 2.511 | 1.645 | 0.278 | 0.282 |
| 46) | 0.270 | 0.904 | 2.511 | 1.645 | 0.278 | 0.282 |
| 47) | 0.306 | 0.255 | 2.049 | 0.631 | 0.648 | 0.396 |
| 48) | 0.306 | 0.255 | 2.049 | 0.631 | 0.648 | 0.396 |
| 49) | 0.342 | 0.203 | 2.468 | 0.631 | 0.656 | 0.267 |
| 50) | 0.342 | 0.203 | 2.468 | 0.631 | 0.656 | 0.267 |
| 51) | 0.359 | 0.922 | 2.468 | 0.631 | 0.656 | 0.268 |
| 52) | 0.359 | 0.922 | 2.068 | 1.279 | 0.586 | 0.343 |
| 53) | 0.370 | 1.419 | 1.354 | 1.781 | 0.176 | 0.464 |
| 54) | 0.370 | 1.419 | 1.354 | 1.781 | 0.176 | 0.464 |
| 55) | 0.371 | 1.536 | 0.546 | 1.927 | 0.115 | 0.467 |
| 56) | 0.371 | 1.536 | 0.546 | 1.927 | 0.115 | 0.467 |
| 57) | 0.382 | 1.388 | 1.801 | 1.781 | 0.816 | 0.403 |
| 58) | 0.382 | 1.388 | 1.801 | 1.781 | 0.816 | 0.403 |
| 59) | 0.392 | 1.361 | 2.532 | 1.623 | 0.085 | 0.296 |
| 60) | 0.392 | 1.361 | 2.532 | 1.623 | 0.085 | 0.296 |
| 61) | 0.427 | 1.568 | 2.826 | 1.370 | 0.855 | 0.477 |
| 62) | 0.427 | 1.568 | 2.826 | 1.370 | 0.855 | 0.477 |
| 63) | 0.429 | 1.313 | 2.410 | 1.863 | 0.745 | 0.455 |
| 64) | 0.429 | 1.313 | 2.410 | 1.863 | 0.745 | 0.455 |
| 65) | 0.454 | 1.619 | 0.178 | 1.878 | 0.403 | 0.355 |
| 66) | 0.454 | 1.619 | 0.178 | 1.878 | 0.403 | 0.355 |
| 67) | 0.463 | 0.208 | 2.247 | 0.481 | 0.049 | 0.357 |
| 68) | 0.463 | 0.208 | 2.247 | 0.481 | 0.049 | 0.357 |
| 69) | 0.476 | 1.638 | 2.090 | 0.870 | 0.278 | 0.473 |
| 70) | 0.476 | 1.638 | 2.090 | 0.870 | 0.278 | 0.473 |
| 71) | 0.478 | 1.693 | 2.542 | 0.988 | 0.468 | 0.387 |
| 72) | 0.478 | 1.693 | 2.542 | 0.988 | 0.468 | 0.387 |
| 73) | 0.484 | 1.608 | 2.052 | 0.531 | 0.669 | 0.464 |
| 74) | 0.484 | 1.608 | 2.052 | 0.531 | 0.669 | 0.464 |
| 75) | 0.487 | 0.767 | 1.155 | 0.308 | 0.502 | 0.200 |
| 76) | 0.487 | 0.767 | 1.155 | 0.308 | 0.502 | 0.200 |
| 77) | 0.503 | 1.660 | 2.376 | 0.979 | 0.574 | 0.356 |
| 78) | 0.503 | 1.660 | 2.376 | 0.979 | 0.574 | 0.356 |
| 79) | 0.516 | 0.763 | 2.375 | 0.828 | 0.432 | 0.232 |
| 80) | 0.516 | 0.763 | 2.375 | 0.828 | 0.432 | 0.232 |
| 81) | 0.555 | 1.173 | 2.762 | 0.531 | 0.469 | 0.255 |
| 82) | 0.555 | 1.173 | 2.762 | 0.531 | 0.469 | 0.255 |
| 83) | 0.561 | 1.187 | 2.537 | 0.092 | 0.892 | 0.305 |
| 84) | 0.561 | 1.187 | 2.537 | 0.092 | 0.892 | 0.305 |
| 85) | 0.567 | 0.739 | 1.977 | 0.658 | 0.444 | 0.250 |
| 86) | 0.567 | 0.739 | 1.977 | 0.658 | 0.444 | 0.250 |
| 87) | 0.586 | 0.493 | 2.593 | 1.741 | 0.940 | 0.478 |
| 88) | 0.586 | 0.493 | 2.593 | 1.741 | 0.940 | 0.478 |
| 89) | 0.587 | 1.150 | 2.548 | 1.037 | 0.575 | 0.490 |
| 90) | 0.587 | 1.150 | 2.548 | 1.037 | 0.575 | 0.490 |
| 91) | 0.591 | 1.149 | 1.805 | 0.755 | 0.808 | 0.471 |
| 92) | 0.591 | 1.149 | 1.805 | 0.755 | 0.808 | 0.471 |
| 93) | 0.602 | 1.467 | 1.991 | 0.838 | 0.941 | 0.331 |
| 94) | 0.602 | 1.467 | 1.991 | 0.838 | 0.941 | 0.331 |
| 95) | 0.615 | 1.102 | 2.157 | 1.493 | 0.666 | 0.321 |
| 96) | 0.615 | 1.102 | 2.157 | 1.493 | 0.666 | 0.321 |
| 97) | 0.619 | 1.019 | 1.391 | 0.442 | 0.623 | 0.246 |
| 98) | 0.619 | 1.019 | 1.391 | 0.442 | 0.62 3 | 0.246 |
| 99) | 0.620 | 0.647 | 2.601 | 0.979 | 0.601 | 0.355 |
| 100) | 0.620 | 0.647 | 2.601 | 0.979 | 0.601 | 0.355 |
| 101) | 0.621 | 0.655 | 1.154 | 1.874 | 0.415 | 0.252 |
| 102) | 0.621 | 0.655 | 1.154 | 1.874 | 0.415 | 0.252 |
| 103) | 0.623 | 1.359 | 2.306 | 0.442 | 0.518 | 0.407 |
| 104) | 0.623 | 1.359 | 2.306 | 0.442 | 0.518 | 0.407 |
| 105) | 0.634 | 1.142 | 2.754 | 0.988 | 0.352 | 0.363 |
| 106) | 0.634 | 1.142 | 2.754 | 0.988 | 0.352 | 0.363 |
| 107) | 0.637 | 0.750 | 2.857 | 1.510 | 0.553 | 0.336 |
| 108) | 0.637 | 0.750 | 2.857 | 1.510 | 0.553 | 0.336 |
| 109) | 0.650 | 1.107 | 2.735 | 0.828 | 0.228 | 0.492 |
| 110) | 0.650 | 1.107 | 2.735 | 0.828 | 0.228 | 0.492 |
| 111) | 0.663 | 1.547 | 2.022 | 0.531 | 0.821 | 0.406 |
| 112) | 0.663 | 1.547 | 2.022 | 0.531 | 0.821 | 0.40 |
| 113) | 0.675 | 1.424 | 2.828 | 1.205 | 0.640 | 0.491 |
| 114) | 0.675 | 1.424 | 2.828 | 1.205 | 0.640 | 0.491 |
| 115) | 0.689 | 0.611 | 2.647 | 0.828 | 0.820 | 0.464 |
| 116) | 0.689 | 0.611 | 2.647 | 0.828 | 0.820 | 0.464 |
| 117) | 0.692 | 1.625 | 2.704 | 1.259 x | 0.820 | 0.444 |
| 118) | 0.692 | 1.625 | 2.704 | 1.259 | 0.235 | 0.444 |
| 119) | 0.699 | 1.127 | 0.587 | 1.995 | 0.593 | 0.478 |
| 120) | 0.699 | 1.127 | 0.587 | 1.995 | 0.593 | 0.478 |
| 121) | 0.700 | 1.361 | 2.385 | 1.592 | 0.983 | 0.378 |
| 122) | 0.700 | 1.361 | 2.385 | 1.592 | 0.983 | 0.378 |
| 123) | 0.709 | 0.709 | 0.092 | 1.204 | 0.502 | 0.092 |
| 124) | 0.709 | 0.709 | 0.092 | 1.204 | 0.502 | 0.092 |
| 125) | 0.722 | 1.110 | 1.984 | 0.442 | 0.115 | 0.331 |
| 126) | 0.722 | 1.110 | 1.984 | 0.442 | 0.115 | 0.331 |
| 127) | 0.729 | 0.607 | 2.324 | 1.251 | 0.311 | 0.385 |
| 128) | 0.729 | 0.607 | 2.324 | 1.251 | 0.311 | 0.385 |
| 129) | 0.730 | 0.431 | 2.890 | 1.623 | 0.326 | 0.445 |
| 130) | 0.730 | 0.431 | 2.890 | 1.623 | 0.326 | 0.445 |
| 131) | 0.165 | 0.997 | 1.263 | 0.442 | 0.905 | 1.765 |
| 132) | 0.165 | 0.997 | 1.263 | 0.442 | 0.905 | 1.765 |
| 133) | 0.424 | 1.458 | 1.099 | 0.442 | 0.249 | 1.775 |
| 134) | 0.424 | 1.458 | 1.099 | 0.442 | 0.249 | 1.775 |
| 135) | 0.434 | 1.555 | 1.160 | 0.113 | 0.859 | 2.776 |
| 136) | 0.434 | 1.555 | 1.160 | 0.113 | 0.859 | 2.776 |
| 137) | 0.434 | 1.555 | 1.160 | 0.113 | 1.141 | 2.776 |
| 138) | 0.434 | 1.555 | 1.160 | 0.113 | 1.141 | 2.776 |
| 139) | 0.525 | 1.163 | 1.203 | 0.459 | 1.270 | 1.65 |
| 140) | 0.525 | 1.163 | 1.203 | 0.459 | 1.270 | 1.65 |
| 141) | 0.604 | 1.301 | 1.136 | 0.337 | 0.791 | 2.88 |
| 142) | 0.604 | 1.301 | 1.136 | 0.337 | 0.791 | 2.88 |
| 143) | 0.704 | 0.850 | 0.730 | 0.092 | 0.305 | 1.87 |
| 144) | 0.704 | 0.850 | 0.730 | 0.092 | 0.305 | 1.87 |

The division of the crankshaft has considerable influence on the vibration pattern of the engine. It is therefore relevant for the understanding of the present invention also to look at embodiments where the crankshaft has been divided in another manner than 6-5-4. As an example of another division of the crankshaft, there will now be considered the even division 5-5-5 where the first crankshaft section consists of engine cylinders C1, C2, C3, 4 and C5, labelled a in Table 2, the second plurality of engine cylinders associated with the second crankshaft section consists of engine cylinders C6, C7, C8, C9 and C10, labelled b in Table 2, and the third plurality of engine cylinders associated with the third crankshaft section consists of engine cylinders C11, C12, C13, C14 and C15, labelled c in Table 2.

**Table 2**

| (Even division 5-5-5) | | | | | | | | | | |
|---|---|---|---|---|---|---|---|---|---|---|
| | Grouped cylinders | | | | | | | | | |
| Group 1 | aa | aa | aa | aa | aa | aa | aa | aa | aa | aa |
| Group 2 | aa | aa | aa | aa | aa | aa | aa | aa | aa | bb |
| Group 3 | bb | bb | bb | bb | bb | bb | cc | cc | cc | cc |
| Group 4 | bb | cc | cc | cc | cc | bcb | bab | cc | bab | cc |
| Group 5 | cc | cc | bab | bcb | cbc | cbc | cc | bab | bcb | aba |
| Group 6 | cc | | cc | cc | | cc | | | cc | |

In the same manner as in connection with Table 1 calculations have been made in order to establish actual firing sequences based on these groups according to the present invention. An extract of the firing sequences are shown in the following listing of Sequences B.

### Sequences B:

1) 1-5-11-13-9-2-4-12-14-7-3-6-8-15-10
2) 1-6-15-11-5-3-7-14-12-4-2-9-13-10-8
3) 1-8-10-13-9-2-4-12-14-7-3-5-11-15-6
4) 1-10-15-8-6-3-7-14-12-4-2-9-13-11-5
5) 1-5-12-14-6-3-7-9-13-10-2-4-11-15-8
6) 1-8-15-11-4-2-10-13-9-7-3-6-14-12-5
7) 1-3-13-12-6-7-4-8-14-10-5-2-9-15-11
8) 1-5-15-13-3-4-10-9-12-8-2-6-11-14-7
9) 1-7-14-11-6-2-8-12-9-10-4-3-13-15-5
10) 1-11-15-9-2-5-10-14-8-4-7-6-12-13-3
11) 1-5-12-13-8-4-3-11-15-7-2-6-10-14-9
12) 1-5-13-12-8-3-4-11-15-7-2-6-10-14-9
13) 1-9-14-10-6-2-7-15-11-3-4-8-13-12-5
14) 1-9-14-10-6-2-7-15-11-4-3-8-12-13-5
15) 1-3-12-13-7-6-4-8-14-10-5-2-9-15-11
16) 1-5-15-13-4-3-9-10-12-8-2-6-11-14-7
17) 1-7-14-11-6-2-8-12-10-9-3-4-13-15-5
18) 1-11-15-9-2-5-10-14-8-4-6-7-13-12-3
19) 1-4-14-13-6-2-7-12-10-9-5-3-11-15-8
20) 1-5-13-11-7-6-4-9-14-10-3-2-12-15-8
21) 1-8-15-11-3-5-9-10-12-7-2-6-13-14-4
22) 1-8-15-12-2-3-10-14-9-4-6-7-11-13-5
23) 1-5-12-13-8-3-4-11-15-7-2-6-10-14-9
24) 1-9-14-10-6-2-7-15-11-4-3-8-13-12-5
25) 1-2-13-14-7-3-6-10-12-9-5-4-8-15-11
26) 1-5-15-14-3-2-9-13-10-6-4-7-11-12-8
27) 1-8-12-11-7-4-6-10-13-9-2-3-14-15-5
28) 1-11-15-8-4-5-9-12-10-6-3-7-14-13-2
29) 1-2-11-15-8-3-5-10-13-9-4-6-7-12-14
30) 1-5-14-15-2-4-9-10-12-7-3-6-11-13-8
31) 1-8-13-11-6-3-7-12-10-9-4-2-15-14-5
32) 1-14-12-7-6-4-9-13-10-5-3-8-15-11-2
33) 1-2-11-14-8-5-4-10-12-9-7-3-6-15-13
34) 1-3-15-14-5-2-8-11-12-6-4-7-9-13-10
35) 1-10-13-9-7-4-6-12-11-8-2-5-14-15-3
36) 1-13-15-6-3-7-9-12-10-4-5-8-14-11-2
37) 1-2-14-12-7-6-3-10-13-9-5-4-8-15-11
38) 1-5-15-14-2-4-9-10-13-6-3-7-11-12-8
39) 1-8-12-11-7-3-6-13-10-9-4-2-14-15-5
40) 1-11-15-8-4-5-9-13-10-3-6-7-12-14-2
41) 1-5-13-12-8-4-3-11-15-7-2-6-10-14-9
42) 1-9-14-10-6-2-7-15-11-3-4-8-12-13-5
43) 1-3-13-14-7-2-6-11-12-8-4-5-9-15-10
44) 1-6-15-13-3-2-9-14-10-5-4-8-12-11-7
45) 1-7-11-12-8-4-5-10-14-9-2-3-13-15-6
46) 1-10-15-9-5-4-8-12-11-6-2-7-14-13-3
47) 1-3-11-14-9-2-5-13-10-8-7-4-6-15-12
48) 1-4-15-13-5-2-7-14-11-3-6-8-9-12-10
49) 1-10-12-9-8-6-3-11-14-7-2-5-13-15-4
50) 1-12-15-6-4-7-8-10-13-5-2-9-14-11-3
51) 1-3-12-15-7-2-6-10-13-9-4-5-8-14-11
52) 1-4-13-15-5-2-8-11-12-7-3-6-10-14-9
53) 1-9-14-10-6-3-7-12-11-8-2-5-15-13-4
54) 1-11-14-8-5-4-9-13-10-6-2-7-15-12-3
55) 1-3-12-15-6-2-7-10-13-8-4-5-9-14-11
56) 1-4-13-15-5-2-7-11-12-8-3-6-9-14-10
57) 1-10-14-9-6-3-8-12-11-7-2-5-15-13-4
58) 1-11-14-9-5-4-8-13-10-7-2-6-15-12-3
59) 1-3-13-12-7-6-4-8-14-10-5-2-9-15-11
60) 1-5-15-13-3-4-9-10-12-8-2-6-11-14-7
61) 1-7-14-11-6-2-8-12-10-9-4-3-13-15-5
62) 1-11-15-9-2-5-10-14-8-4-6-7-12-13-3
63) 1-5-13-11-6-7-4-8-15-10-2-3-12-14-9
64) 1-6-14-13-4-2-7-15-11-3-5-10-9-12-8
65) 1-8-12-9-10-5-3-11-15-7-2-4-13-14-6
66) 1-9-14-12-3-2-10-15-8-4-7-6-11-13-5
67) 1-5-12-13-8-2-4-14-II-7-6-3-10-15-9
68) 1-6-13-10-9-5-2-12-14-8-3-4-11-15-7
69) 1-7-15-11-4-3-8-14-12-2-5-9-10-13-6
70) 1-9-15-10-3-6-7-11-14-4-2-8-13-12-5
71) 1-5-13-11-7-6-4-8-15-10-2-3-12-14-9
72) 1-6-14-13-4-2-7-15-11-3-5-9-10-12-8
73) 1-8-12-10-9-5-3-11-15-7-2-4-13-14-6
74) 1-9-14-12-3-2-10-15-8-4-6-7-11-13-5
75) 1-6-12-11-8-5-4-10-15-9-2-3-13-14-7
76) 1-7-14-13-3-2-9-15-10-4-5-8-11-12-6
77) 1-5-12-13-8-3-4-11-15-6-2-7-10-14-9
78) 1-5-12-13-8-3-4-11-15-7-2-6-9-14-10
79) 1-9-14-10-7-2-6-15-11-4-3-8-13-12-5
80) 1-10-14-9-6-2-7-15-11-4-3-8-13-12-5
81) 1-2-13-14-7-3-6-9-12-10-5-4-8-15-11
82) 1-5-15-14-3-2-9-13-10-7-4-6-11-12-8
83) 1-8-12-11-6-4-7-10-13-9-2-3-14-15-5
84) 1-11-15-8-4-5-10-12-9-6-3-7-14-13-2
85) 1-4-12-14-8-2-5-13-11-7-6-3-10-15-9
86) 1-6-13-10-9-5-3-11-14-8-2-4-12-15-7
87) 1-7-15-12-4-2-8-14-11-3-5-9-10-13-6
88) 1-9-15-10-3-6-7-11-13-5-2-8-14-12-4
89) 1-3-12-14-7-4-5-10-15-8-2-6-9-13-11
90) 1-6-11-12-9-2-4-13-15-5-3-7-10-14-8
91) 1-8-14-10-7-3-5-15-13-4-2-9-12-11-6
92) 1-11-13-9-6-2-8-15-10-5-4-7-14-12-3
93) 1-3-12-14-8-2-6-10-13-9-4-5-7-15-11
94) 1-5-15-13-4-2-8-14-10-6-3-7-12-11-9
95) 1-9-11-12-7-3-6-10-14-8-2-4-13-15-5
96) 1-11-15-7-5-4-9-13-10-6-2-8-14-12-3
97) 1-4-13-14-6-2-7-11-12-8-3-5-10-15-9
98) 1-6-11-13-8-4-5-9-14-10-2-3-12-15-7
99) 1-7-15-12-3-2-10-14-9-5-4-8-13-11-6
100) 1-9-15-10-5-3-8-12-11-7-2-6-14-13-4
101) 1-4-12-14-8-2-5-13-11-6-7-3-9-15-10
102) 1-6-15-12-4-2-8-14-11-3-5-10-9-13-7
103) 1-7-13-9-10-5-3-11-14-8-2-4-12-15-6
104) 1-10-15-9-3-7-6-11-13-5-2-8-14-12-4
105) 1-8-14-12-2-4-9-13-11-3-6-5-15-10-7
106) 1-7-10-15-5-6-3-11-13-9-4-2-12-14-8
107) 1-6-9-15-8-2-4-14-12-7-3-5-13-10-11
108) 1-11-10-13-5-3-7-12-14-4-2-8-15-9-6
109) 1-7-10-14-8-2-4-12-15-6-3-5-13-11-9
110) 1-9-11-13-5-3-6-15-12-4-2-8-14-10-7
111) 1-4-12-14-8-2-6-9-15-7-5-3-11-13-10
112) 1-10-13-11-3-5-7-15-9-6-2-8-14-12-4
In the same manner as for the firing sequences A harmonic analyses are performed in order to obtain values for the various resulting vibration levels caused by the excitation sources in the engine. The below List B shows the values calculated for the firing sequences mentioned in Sequences B. The columns refer to the same types of vibration values as in the list A and reference is made thereto for the meaning of E1, E2 and X4 to X7.

### List B:

| | E1 | E2 | X4 | X5 | X6 | X7 |
|---|---|---|---|---|---|---|
| 1) | 0.358 | 1.222 | 0.815 | 1.500 | 0.767 | 0.422 |
| 2) | 0.358 | 1.222 | 0.815 | 1.500 | 0.767 | 0.422 |
| 3) | 0.358 | 1.222 | 0.815 | 1.500 | 0.767 | 0.422 |
| 4) | 0.358 | 1.222 | 0.815 | 1.500 | 0.767 | 0.422 |
| 5) | 0.074 | 0.952 | 1.629 | 0.833 | 0.745 | 0.101 |
| 6) | 0.074 | 0.952 | 1.629 | 0.833 | 0.745 | 0.101 |
| 7) | 0.141 | 1.500 | 2.308 | 1.642 | 0.835 | 0.409 |
| 8) | 0.141 | 1.500 | 2.308 | 1.642 | 0.835 | 0.409 |
| 9) | 0.141 | 1.500 | 2.308 | 1.642 | 0.835 | 0.409 |
| 10) | 0.141 | 1.500 | 2.308 | 1.642 | 0.835 | 0.409 |
| 11) | 0.248 | 1.133 | 0.115 | 1.507 | 0.332 | 0.359 |
| 12) | 0.248 | 1.133 | 0.115 | 1.507 | 0.332 | 0.359 |
| 13) | 0.248 | 1.133 | 0.115 | 1.507 | 0.332 | 0.359 |
| 14) | 0.248 | 1.133 | 0.115 | 1.507 | 0.332 | 0.359 |
| 15) | 0.273 | 0.777 | 1.957 | 1.254 | 0.609 | 0.495 |
| 16) | 0.273 | 0.777 | 1.957 | 1.254 | 0.609 | 0.495 |
| 17) | 0.273 | 0.777 | 1.957 | 1.254 | 0.609 | 0.495 |
| 18) | 0.273 | 0.777 | 1.957 | 1.254 | 0.609 | 0.495 |
| 19) | 0.278 | 1.305 | 2.310 | 0.722 | 0.779 | 0.234 |
| 20) | 0.278 | 1.305 | 2.310 | 0.722 | 0.779 | 0.234 |
| 21) | 0.278 | 1.305 | 2.310 | 0.722 | 0.779 | 0.234 |
| 22) | 0.278 | 1.305 | 2.310 | 0.722 | 0.779 | 0.234 |
| 23) | 0.295 | 0.576 | 0.137 | 1.283 | 0.499 | 0.183 |
| 24) | 0.295 | 0.576 | 0.137 | 1.283 | 0.499 | 0.183 |
| 25) | 0.325 | 0.973 | 2.425 | 0.722 | 0.163 | 0.337 |
| 26) | 0.325 | 0.973 | 2.425 | 0.722 | 0.163 | 0.337 |
| 27) | 0.325 | 0.973 | 2.425 | 0.722 | 0.163 | 0.337 |
| 28) | 0.325 | 0.973 | 2.425 | 0.722 | 0.163 | 0.337 |
| 29) | 0.340 | 0.875 | 2.108 | 1.642 | 0.950 | 0.444 |
| 30) | 0.340 | 0.875 | 2.108 | 1.642 | 0.950 | 0.444 |
| 31) | 0.340 | 0.875 | 2.108 | 1.642 | 0.950 | 0.444 |
| 32) | 0.340 | 0.875 | 2.108 | 1.642 | 0.950 | 0.444 |
| 33) | 0.356 | 0.608 | 2.495 | 1.340 | 0.407 | 0.446 |
| 34) | 0.356 | 0.608 | 2.495 | 1.340 | 0.407 | 0.446 |
| 35) | 0.356 | 0.608 | 2.495 | 1.340 | 0.407 | 0.446 |
| 36) | 0.356 | 0.608 | 2.495 | 1.340 | 0.407 | 0.446 |
| 37) | 0.376 | 1.060 | 1.857 | 1.953 | 0.857 | 0.361 |
| 38) | 0.376 | 1.060 | 1.857 | 1.953 | 0.857 | 0.361 |
| 39) | 0.376 | 1.060 | 1.857 | 1.953 | 0.857 | 0.361 |
| 40) | 0.376 | 1.060 | 1.857 | 1.953 | 0.857 | 0.361 |
| 41) | 0.378 | 1.079 | 0.175 | 1.732 | 0.099 | 0.342 |
| 42) | 0.378 | 1.079 | 0.175 | 1.732 | 0.099 | 0.342 |
| 43) | 0.414 | 0.989 | 1.916 | 0.449 | 0.240 | 0.391 |
| 44) | 0.414 | 0.989 | 1.916 | 0.449 | 0.240 | 0.391 |
| 45) | 0.414 | 0.989 | 1.916 | 0.449 | 0.240 | 0.391 |
| 46) | 0.414 | 0.989 | 1.916 | 0.449 | 0.240 | 0.391 |
| 47) | 0.434 | 0.825 | 2.949 | 1.631 | 0.433 | 0.350 |
| 48) | 0.434 | 0.825 | 2.949 | 1.631 | 0.433 | 0.350 |
| 49) | 0.434 | 0.825 | 2.949 | 1.631 | 0.433 | 0.350 |
| 50) | 0.434 | 0.825 | 2.949 | 1.631 | 0.433 | 0.350 |
| 51) | 0.444 | 1.216 | 1.980 | 0.747 | 0.780 | 0.156 |
| 52) | 0.444 | 1.216 | 1.980 | 0.747 | 0.780 | 0.156 |
| 53) | 0.444 | 1.216 | 1.980 | 0.747 | 0.780 | 0.156 |
| 54) | 0.444 | 1.216 | 1.980 | 0.747 | 0.780 | 0.156 |
| 55) | 0.494 | 1.416 | 2.092 | 0.833 | 0.757 | 0.434 |
| 56) | 0.494 | 1.416 | 2.092 | 0.833 | 0.757 | 0.434 |
| 57) | 0.494 | 1.416 | 2.092 | 0.833 | 0.757 | 0.434 |
| 58) | 0.494 | 1.416 | 2.092 | 0.833 | 0.757 | 0.434 |
| 59) | 0.496 | 0.718 | 2.123 | 1.461 | 0.613 | 0.365 |
| 60) | 0.496 | 0.718 | 2.123 | 1.461 | 0.613 | 0.365 |
| 61) | 0.496 | 0.718 | 2.123 | 1.461 | 0.613 | 0.365 |
| 62) | 0.496 | 0.718 | 2.123 | 1.461 | 0.613 | 0.365 |
| 63) | 0.525 | 1.281 | 2.331 | 1.557 | 0.560 | 0.452 |
| 64) | 0.525 | 1.281 | 2.331 | 1.557 | 0.560 | 0.452 |
| 65) | 0.525 | 1.281 | 2.331 | 1.557 | 0.560 | 0.452 |
| 66) | 0.525 | 1.281 | 2.331 | 1.557 | 0.560 | 0.452 |
| 67) | 0.585 | 1.097 | 1.479 | 1.722 | 0.847 | 0.305 |
| 68) | 0.585 | 1.097 | 1.479 | 1.722 | 0.847 | 0.305 |
| 69) | 0.585 | 1.097 | 1.479 | 1.722 | 0.847 | 0.305 |
| 70) | 0.585 | 1.097 | 1.479 | 1.722 | 0.847 | 0.305 |
| 71) | 0.586 | 0.803 | 2.160 | 1.340 | 0.400 | 0.385 |
| 72) | 0.586 | 0.803 | 2.160 | 1.340 | 0.400 | 0.385 |
| 73) | 0.586 | 0.803 | 2.160 | 1.340 | 0.400 | 0.385 |
| 74) | 0.586 | 0.803 | 2.160 | 1.340 | 0.400 | 0.385 |
| 75) | 0.594 | 0.060 | 1.965 | 0.449 | 0.300 | 0.477 |
| 76) | 0.594 | 0.060 | 1.965 | 0.449 | 0.300 | 0.477 |
| 77) | 0.601 | 1.418 | 0.377 | 1.507 | 0.629 | 0.206 |
| 78) | 0.601 | 1.418 | 0.377 | 1.507 | 0.629 | 0.206 |
| 79) | 0.601 | 1.418 | 0.377 | 1.507 | 0.629 | 0.206 |
| 80) | 0.601 | 1.418 | 0.377 | 1.507 | 0.629 | 0.206 |
| 81) | 0.603 | 1.147 | 2.461 | 0.747 | 0.311 | 0.382 |
| 82) | 0.603 | 1.147 | 2.461 | 0.747 | 0.311 | 0.382 |
| 83) | 0.603 | 1.147 | 2.461 | 0.747 | 0.311 | 0.382 |
| 84) | 0.603 | 1.147 | 2.461 | 0.747 | 0.311 | 0.382 |
| 85) | 0.650 | 1.460 | 1.749 | 1.308 | 0.687 | 0.251 |
| 86) | 0.650 | 1.460 | 1.749 | 1.308 | 0.687 | 0.251 |
| 87) | 0.650 | 1.460 | 1.749 | 1.308 | 0.687 | 0.251 |
| 88) | 0.650 | 1.460 | 1.749 | 1.308 | 0.687 | 0.251 |
| 89) | 0.692 | 0.728 | 0.864 | 1.846 | 0.641 | 0.147 |
| 90) | 0.692 | 0.728 | 0.864 | 1.846 | 0.641 | 0.147 |
| 91) | 0.692 | 0.728 | 0.864 | 1.846 | 0.641 | 0.147 |
| 92) | 0.692 | 0.728 | 0.864 | 1.846 | 0.641 | 0.147 |
| 93) | 0.700 | 1.114 | 1.971 | 0.766 | 0.923 | 0.447 |
| 94) | 0.700 | 1.114 | 1.971 | 0.766 | 0.923 | 0.447 |
| 95) | 0.700 | 1.114 | 1.971 | 0.766 | 0.923 | 0.447 |
| 96) | 0.700 | 1.114 | 1.971 | 0.766 | 0.923 | 0.447 |
| 97) | 0.709 | 1.682 | 1.741 | 0.225 | 0.426 | 0.304 |
| 98) | 0.709 | 1.682 | 1.741 | 0.225 | 0.426 | 0.304 |
| 99) | 0.709 | 1.682 | 1.741 | 0.225 | 0.426 | 0.304 |
| 100) | 0.709 | 1.682 | 1.741 | 0.225 | 0.426 | 0.304 |
| 101) | 0.717 | 0.780 | 2.135 | 1.557 | 0.712 | 0.465 |
| 102) | 0.717 | 0.780 | 2.135 | 1.557 | 0.712 | 0.465 |
| 103) | 0.717 | 0.780 | 2.135 | 1.557 | 0.712 | 0.465 |
| 104) | 0.717 | 0.780 | 2.135 | 1.557 | 0.712 | 0.465 |
| 105) | 0.117 | 1.470 | 1.342 | 0.225 | 1.114 | 2.190 |
| 106) | 0.117 | 1.470 | 1.342 | 0.225 | 1.114 | 2.190 |
| 107) | 0.117 | 1.470 | 1.342 | 0.225 | 1.114 | 2.190 |
| 108) | 0.117 | 1.470 | 1.342 | 0.225 | 1.114 | 2.190 |
| 109) | 0.554 | 1.498 | 0.953 | 0.420 | 0.300 | 1.63 |
| 110) | 0.554 | 1.498 | 0.953 | 0.420 | 0.300 | 1.63 |
| 111) | 0.554 | 1.498 | 0.953 | 0.420 | 0.300 | 1.63 |
| 112) | 0.554 | 1.498 | 0.953 | 0.420 | 0.300 | 1.63 |

A preferred firing sequence 1 5 12 13 8 3 4 11 15 7 2 6 10 14 9 is illustrated in Fig. 3. The individual crank throw comprises two crank arms 34 and the crank pin 9, and the crank shaft journals 11 join the crank throws into a complete crank shaft.

The cylinders C1 to C15 fire in the mentioned sequence. A firing sequence is implemented in the engine by the making the crankshaft 10 with crank throws pointing in the angular pattern required for obtaining the firing sequence. The pattern required for the preferred firing sequence as an even firing sequence, viz. a firing sequence with a regular (even) angular interval of 360°/15 = 24° between the firings is illustrated in Fig. 3.

The respective angles between the crank throws 33 of the crankshaft appear in Fig. 3. It is also possible to use irregular firing sequences, viz. a firing sequence that is uneven in the sense that the angular interval between the firings of at least two pairs, and possibly several pairs, of consecutively firing cylinders deviates from 24°. A deviation of only a few degrees can result in a very different vibration pattern in the engine.

The engine can be an electronically controlled engine without a camshaft for activating fuel pumps and exhaust valves, e.g. an engine of the type ME. If the engine is of a traditional type with a camshaft, the camshaft can be driven from the crankshaft via a chain drive or a gearing, which suitably can be located between the cylinders separated by the larger distance 12.

The engine according to the present invention is suitable for use as a main propulsion engine in a container ship, and especially in a container ship having a capacity of at least 12.000 TEU, such as from 12.200 to 15.000 TEU, one TEU being the equivalent of a single 20' container. TEU is the standard measure for the capacity of a container ship.

It is possible to make modifications to the embodiments described in the above. The groups can e.g. be differently composed, such as cac or aba. The engine frame can be of any suitable shape. The cylinders need not be numbered with C1 at the forward end of the engine and C15 at the aft end. They can equally well be numbered with C1 at the aft end and C15 at the forward end. And the engine can have a rotational direction either the one or the other direction. As an alternative to being a main engine in a ship, the engine can be utilized as a stationary engine in a power plant.

## Claims

1. Two-stroke internal combustion engine having 15 cylinders in a single row and a crankshaft, which internal combustion engine has a firing sequence (n1 - n15) of the engine cylinders C1 to C15, **characterized in that** the crankshaft is built in three sections assembled in extension of one another, that a first crankshaft section of said three sections is associated with a first plurality of engine cylinders including engine cylinder C1, a second crankshaft section of said three sections is associated with a second plurality of engine cylinders including engine cylinder C8 and a third crankshaft section of said three sections is associated with a third plurality of engine cylinders including engine cylinder C15, and that the firing sequence (n1 - n15) of the fifteen cylinders includes at least the following five groups of mutually different cylinders:
1) a first group of only two consecutively firing cylinders from said first plurality of engine cylinders,
2) a second group of only two consecutively firing cylinders from a single one of said first plurality, said second plurality or said third plurality of engine cylinders,
3) a third group of only two consecutively firing cylinders from a single one of said first plurality, said second plurality or said third plurality of engine cylinders,
4) a fourth group of either
only two consecutively firing cylinders from a single one of said first plurality, said second plurality or said third plurality of engine cylinders, or
three consecutively firing cylinders of which the first and the third firing cylinder are from a single one of said first plurality, said second plurality or said third plurality of engine cylinders, and the second firing cylinder is from either the same plurality of engine cylinders as the first and third firing cylinder or from one of the other pluralities of cylinders, and
5) a fifth group of either
only two consecutively firing cylinders from a single one of said first plurality, said second plurality or said third plurality of engine cylinders, or
three consecutively firing cylinders of which the first and the third firing cylinder are from a single one of said first plurality, said second plurality or said third plurality of engine cylinders, and the second firing cylinder is from either the same plurality of engine cylinders as the first and third firing cylinder or from one of the other pluralities of cylinders.

2. A two-stroke internal combustion engine according to claim 1, **characterized in that** the first plurality of engine cylinders associated with the first crankshaft section consists of engine cylinders C1 to C5, that the second plurality of engine cylinders associated with the second crankshaft section consists of engine cylinders C6 to C10, that the third plurality of engine cylinders associated with the third crankshaft section consists of engine cylinders C11 to C15, and that the third group of two consecutively firing cylinders is from the second plurality of engine cylinders or from the third plurality of engine cylinders.

3. A two-stroke internal combustion engine according to claim 1, **characterized in that** the first plurality of engine cylinders associated with the first crankshaft section consists of engine cylinders C1 to C6, that the second plurality of engine cylinders associated with the second crankshaft section consists of engine cylinders C7 to C11, that the third plurality of engine cylinders associated with the third crankshaft section consists of engine cylinders C12 to C15, and that the third group of two consecutively firing cylinders is from the first plurality of engine cylinders or from the third plurality of engine cylinders.

4. A two-stroke internal combustion engine according to any one of claims 1 to 3, **characterized in that** the second group of only two consecutively firing cylinders is from the first plurality of engine cylinders or from the second plurality of engine cylinders.

5. A two-stroke internal combustion engine according to claim 3 or 4, **characterized in that** the fifth group is three consecutively firing cylinders from the first plurality of engine cylinders or three consecutively firing cylinders from the second plurality of engine cylinders.

6. A two-stroke internal combustion engine according to any of claims 1 to 5, **characterized in that** the fourth group is three consecutively firing cylinders of which the first and the third firing cylinder are from the second plurality of engine cylinders and the second firing cylinder is from either the first plurality of engine cylinders or from the third plurality of engine cylinders.

7. A two-stroke internal combustion engine according to any of claims 1 to 5, **characterized in that** the fourth group is two consecutively firing cylinders from either the second plurality of engine cylinders or from the third plurality of engine cylinders.

8. A two-stroke internal combustion engine according to any of claims 1, 2, 3, 4, 6 or 7, **characterized in that** the fifth group has three consecutively firing cylinders of which at least one is from the second plurality of engine cylinders.

9. A two-stroke internal combustion engine according to claim 8, **characterized in that** the fifth group has two cylinders from the second plurality of engine cylinders.

10. A two-stroke internal combustion engine according to any one of claims 1, 2, 3, 4, 6 or 7, **characterized in that** the fifth group is two consecutively firing cylinders from the third plurality of engine cylinders.

11. A two-stroke internal combustion engine according to claims 1 and 10, **characterized in that** the firing sequence (n1 - n15) of the fifteen cylinders further includes a sixth group of two consecutively firing cylinders from said third plurality of engine cylinders.

12. A two-stroke internal combustion engine according to claim 1, **characterized in that** the first six cylinders in the firing sequence are two cylinders from the first plurality of engine cylinders followed by two cylinders from the third plurality of engine cylinders followed by one cylinder from the second plurality of engine cylinders followed by one cylinder from the first plurality of engine cylinders.

13. A two-stroke internal combustion engine according to claim 1, **characterized in that** the first two cylinders in the firing sequence are two cylinders from the first plurality of engine cylinders, and that the five last cylinders in the firing sequence are two cylinders from the first plurality of engine cylinders followed by one cylinder from the second plurality of engine cylinders followed by one cylinder from the third plurality of engine cylinders followed by one cylinder from the second plurality of engine cylinders.

14. A two-stroke internal combustion engine according to claim 2, **characterized in that** there are at the most two of the groups that have two consecutively firing cylinders from the first plurality of engine cylinders.

15. A two-stroke internal combustion engine according to any of claims 1, 2, 3, 4, 6, 7, 8, 9, 10, 11 and 12, **characterized in that** none of the groups in the firing sequence includes three consecutively firing cylinders from a single one of said first plurality, said second plurality or said third plurality of engine cylinders.

## Patentansprüche

1. Zweitaktverbrennungsmotor mit fünfzehn Zylindern in einer einzigen Reihe und einer Kurbelwelle, wobei der Verbrennungsmotor eine Zündfolge (n1 - n15) der Motorzylinder C1 bis C15 aufweist, **dadurch gekennzeichnet, dass** die Kurbelwelle aus drei, aneinander anschließenden Abschnitten gebildet ist, dass einem ersten Kurbelwellenabschnitt der drei Abschnitte eine den Motorzylinder C1 umfassende erste Vielzahl von Motorzylindern zugeordnet ist, einem zweiten Kurbelwellenabschnitt der drei Abschnitte eine den Motorzylinder C8 umfassende zweite Vielzahl von Motorzylindern zugeordnet ist und einem dritten Kurbelwellenabschnitt der drei Abschnitte eine den Motorzylinder C15 umfassende dritte Vielzahl von Motorzylindern zugeordnet ist, und dass die Zündfolge (n1 - n15) der fünfzehn Zylinder wenigstens die folgenden fünf Gruppen von jeweils verschiedenen Zylindern umfasst:
1) eine erste Gruppe von nur zwei aufeinanderfolgend zündenden Zylindern der ersten Vielzahl von Motorzylindern,
2) eine zweite Gruppe von nur zwei aufeinanderfolgend zündenden Zylindern aus entweder einer der ersten Vielzahl, der zweiten Vielzahl oder der dritten Vielzahl von Motorzylindern,
3) eine dritte Gruppe von nur zwei aufeinanderfolgend zündenden Zylindern aus entweder der ersten Vielzahl, der zweiten Vielzahl oder der dritten Vielzahl von Motorzylindern,
4) eine vierte Gruppe von entweder
nur zwei aufeinanderfolgend zündenden Zylindern aus entweder der ersten Vielzahl, der zweiten Vielzahl oder der dritten Vielzahl von Motorzylindern, oder
drei aufeinanderfolgend zündenden Zylindern, von denen der als erster und der als dritter zündende Zylinder entweder zu der ersten Vielzahl, der zweiten Vielzahl oder der dritten Vielzahl von Motorzylindern gehören, und der als zweiter zündende Zylinder entweder zu der selben Vielzahl von Motorzylindern wie der als erster und als dritter zündende Zylinder oder zu einer anderen Vielzahl von Zylindern gehört, und
5) eine fünfte Gruppe von entweder
nur zwei aufeinanderfolgend zündenden Zylindern aus entweder der ersten Vielzahl, der zweiten Vielzahl oder der dritten Vielzahl von Motorzylindern, oder
drei aufeinanderfolgend zündenden Zylindern, von denen der als erster und der als dritter zündende Zylinder entweder zu einer der ersten Vielzahl, der zweiten Vielzahl oder der dritten Vielzahl von Motorzylindern gehören, und der als zweiter zündende Zylinder entweder zu der selben Vielzahl von Motorzylindern wie der als erster und als dritter zündende Zylinder oder einer anderen Vielzahl von Zylindern gehört.

2. Zweitaktverbrennungsmotor nach Anspruch 1, **dadurch gekennzeichnet, dass** die erste, dem ersten Kurbelwellenabschnitt zugeordnete Vielzahl von Motorzylindern aus den Motorzylindern C1 bis C5 besteht, dass die zweite, dem zweiten Kurbelwellenabschnitt zugeordnete Vielzahl von Motorzylindern aus den Motorzylindern C6 bis C10 besteht, dass die dritte, dem dritten Kurbelwellenabschnitt zugeordnete Vielzahl von Motorzylindern aus den Motorzylindern C11 bis C15 besteht, und dass die dritte Gruppe von zwei aufeinanderfolgend zündenden Zylindern zu der zweiten Vielzahl von Motorzylindern oder zu der dritten Vielzahl von Motorzylindern gehört.

3. Zweitaktverbrennungsmotor nach Anspruch 1, **dadurch gekennzeichnet, dass** die erste, dem ersten Kurbelwellenabschnitt zugeordnete Vielzahl von Motorzylindern aus den Motorzylindern C1 bis C6 besteht, dass die zweite, dem zweiten Kurbelwellenabschnitt zugeordnete Vielzahl von Motorzylindern aus den Motorzylindern C7 bis C11 besteht, dass die dritte, dem dritten Kurbelwellenabschnitt zugeordnete Vielzahl von Motorzylindern aus den Motorzylindern C12 bis C15 besteht, und dass die dritte Gruppe von zwei aufeinanderfolgend zündenden Zylindern zu der ersten Vielzahl von Motorzylindern oder zu der dritten Vielzahl von Motorzylindern gehört.

4. Zweitaktverbrennungsmotor nach einem der Ansprüche 1 bis 3, **dadurch gekennzeichnet, dass** die zweite Gruppe von nur zwei aufeinanderfolgend zündenden Zylindern zu der ersten Vielzahl von Motorzylindern oder zu der zweiten Vielzahl von Motorzylindern gehört.

5. Zweitaktverbrennungsmotor nach Anspruch 3 oder 4, **dadurch gekennzeichnet, dass** die fünfte Gruppe drei aufeinanderfolgend zündende Zylinder aus der ersten Vielzahl von Motorzylindern oder drei aufeinanderfolgend zündende Zylinder aus der zweiten Vielzahl von Motorzylindern aufweist.

6. Zweitaktverbrennungsmotor nach einem der Ansprüche 1 bis 5, **dadurch gekennzeichnet, dass** die vierte Gruppe drei aufeinanderfolgend zündende Zylinder aufweist, von denen der als erster und der als dritter zündende Zylinder zu der zweiten Vielzahl von Motorzylindern gehören und der als zweiter zündende Zylinder entweder zu der ersten Vielzahl von Motorzylindern oder zu der dritten Vielzahl von Motorzylindern gehört.

7. Zweitaktverbrennungsmotor nach einem der Ansprüche 1 bis 5, **dadurch gekennzeichnet, dass** die vierte Gruppe zwei aufeinanderfolgend zündende Zylinder aufweist, die entweder zu der zweiten Vielzahl von Motorzylindern oder zu der dritten Vielzahl von Motorzylindern gehören.

8. Zweitaktverbrennungsmotor nach einem der Ansprüche 1, 2, 3, 4, 6 oder 7, **dadurch gekennzeichnet, dass** die fünfte Gruppe drei aufeinanderfolgend zündende Zylinder aufweist, von denen wenigstens einer zu der zweiten Vielzahl von Motorzylindern gehört.

9. Zweitaktverbrennungsmotor nach Anspruch 8, **dadurch gekennzeichnet, dass** die fünfte Gruppe zwei Zylinder aufweist, die zu der zweiten Vielzahl von Motorzylindern gehören.

10. Zweitaktverbrennungsmotor nach einem der Ansprüche 1, 2, 3, 4, 6 oder 7, **dadurch gekennzeichnet, dass** die fünfte Gruppe zwei aufeinanderfolgend zündende Zylinder aufweist, die zu der dritten Vielzahl von Motorzylindern gehören.

11. Zweitaktverbrennungsmotor nach den Ansprüchen 1 und 10, **dadurch gekennzeichnet, dass** die Zündfolge (n1 - n15) der fünfzehn Zylinder weiter eine sechste Gruppe von zwei aufeinanderfolgend zündenden Zylindern umfasst, die zu der dritten Vielzahl von Motorzylindern gehören.

12. Zweitaktverbrennungsmotor nach Anspruch 1, **dadurch gekennzeichnet, dass** die ersten sechs Zylinder in der Zündfolge zwei zu der ersten Vielzahl von Motorzylindern gehörende Zylinder sind, gefolgt von zwei zu der dritten Vielzahl von Motorzylindern gehörende Zylinder, gefolgt von einem zu der zweiten Vielzahl von Motorzylindern gehörenden Zylinder, gefolgt von einem zu der ersten Vielzahl von Motorzylindern gehörenden Zylinder.

13. Zweitaktverbrennungsmotor nach Anspruch 1, **dadurch gekennzeichnet, dass** die ersten zwei Zylinder in der Zündfolge zwei zu der ersten Vielzahl von Motorzylindern gehörende Zylinder sind, und dass die fünf letzten Zylinder in der Zündfolge zwei zu der ersten Vielzahl von Motorzylindern gehörende Zylinder, gefolgt von einem zu der zweiten Vielzahl von Motorzylindern gehörenden Zylinder, gefolgt von einem zu der dritten Vielzahl gehörenden Zylinder, gefolgt von einem zu der zweiten Vielzahl von Motorzylindern gehörenden Zylinder sind.

14. Zweitaktverbrennungsmotor gemäß Anspruch 2, **dadurch gekennzeichnet, dass** höchstens zwei von den Gruppen vorhanden sind, die zwei aufeinanderfolgend zündende, zu der ersten Vielzahl von Motorzylindern gehörende Zylinder aufweisen.

15. Zweitaktverbrennungsmotor nach einem der Ansprüche 1, 2, 3, 4, 6, 7, 8, 9, 10, 11 und 12, **dadurch gekennzeichnet, dass** keine der Gruppen in der Zündfolge drei aufeinanderfolgend zündende Zylinder aus jeweils einer der ersten Vielzahl, der zweiten Vielzahl oder der dritten Vielzahl von Motorzylindern umfasst.

## Revendications

1. Moteur à combustion interne à deux temps ayant 15 cylindres repartis sur une seule rangée et un vilebrequin, dont le moteur à combustion interne a un ordre de mise à feu (n1 à n15) de cylindres de moteur C1 à C15, **caractérisé en ce que** le vilebrequin est incorporé dans trois tronçons assemblés dans le prolongement l'un de l'autres, qu'un premier tronçon de vilebrequin de trois tronçons dits est associé avec une première pluralité de cylindres de moteur comprenant le cylindre de moteur C1, un deuxième tronçon de vilebrequin de trois tronçons dits est associé avec une deuxième pluralité de cylindres de moteur comprenant le cylindre de moteur C8 et un troisième tronçon de vilebrequin de trois tronçons dits est associé avec une troisème pluralité de cylindres de moteur comprenant le cylindre de moteur C15, et que l'ordre de mise à feu (n1 - n15) des quinze cylindres comprend au moins les cinq groupes suivants de cylindres mutuellement différents :
1) un premier groupe de seulement deux cylindres de mise à feu consécutifs de la première pluralité dite de cylindres de moteur,
2) un deuxième groupe de seulement deux cylindres de mise à feu consécutifs d'une seule de la première pluralité dite, de la deuxième pluralité dite ou de la troisième pluralité dite de cylindres de moteur,
3) un troisième groupe de seulement deux cylindres de mise à feu consécutifs d'une seule de la première pluralité dite, de la deuxième pluralité dite ou de la troisième pluralité dite de cylindres de moteur,
4) un quatrième groupe de soit seulement deux cylindres de mise à feu consécutifs d'une seule de la pluralité dite, de la deuxième pluralité dite ou de la troisième pluralité dite de cylindres de moteur, soit trois cylindres de mise à feu consécutifs dont le premier et le troisième cylindre de mise à feu proviennent d'une seule de la première pluralité dite, de la deuxième pluralité dite ou de la troisième pluralité dite de cylindres de moteur, et le deuxième cylindre de mise à feu provients de soit la même pluralité de cylindres de moteur que le premier et le troisième cylindre de mise à feu soit d'une des autres pluralités de cylindres, et
5) un cinquième groupe de soit seulement deux cylindres de mise à feu consécutifs d'une seule de la première pluralité dite, de la deuxième pluralité dite soit de la troisième pluralité dite de cylindres de moteur, ou de la troisième cylindre de mise à feu dont le premier et le troisième cylindre de mise à feu proviennent d'une seule de la première pluralité dite, de la deuxième pluralité dite ou de la troisième pluralité dite de cylindres de moteur dite, et le deuxième cylindre de mise à feu provient de la même pluralité de cylindres de moteur que le premier et le troisième cylindre de mise à feu ou d'une des autres pluralités de cylindres.

2. Moteur à combustion interne à deux temps selon la revendication 1, **caractérisé en ce que** la première pluralité de cylindres de moteur associée avec le premier tronçon de vilebrequin se compose de cylindres de moteur C1 à C5, que la deuxième pluralité de cylindres de moteur associée avec le deuxième tronçon de vilebrequin se compose de cylindres de moteur C6 à C10 que la troisième pluralité de cylindres de moteur associée avec le troisième tronçon de vilebrequin se compose de cylindres de moteur C11 à C15, et que le troisième groupe de deux cylindres de mise à feu consécutifs provient de la deuxième pluralité de cylindres de moteur ou de la troisième pluralité de cylindres de moteur.

3. Moteur à combustion interne à deux temps selon la revendication 1, **caractérisé en ce que** la première pluralité de cylindres de moteur associée avec le premier tronçon de vilebrequin se compose de cylindres de moteur C1 à C6, que la deuxième pluralité de cylindres de moteur associée avec le deuxième tronçon de vilebrequin se compose de cylindres de moteur à C7 à C11, la troisième pluralité de cylindres de moteur associée avec le troisième tronçon de vilebrequin se compose de cylindres de moteur C12 à C15, et que le troisième groupe de deux cylindres de mise à feu consécutifs provient de la première pluralité de cylindres de moteur ou de la troisième pluralité de cylindres de moteur.

4. Moteur à combustion interne à deux temps selon l'une quelconque des revendications 1-3, **caractérisé en ce que** le deuxième groupe de seulement deux cylindres de mise à feu consécutifs provient de la première pluralité de cylindres de moteur ou de la deuxième pluralité de cylindres de moteur.

5. Moteur à combustion interne à deux temps selon les revendications 3 ou 4, **caractérisé en ce que** le cinquième groupe se compose de trois cylindres de mise à feu consécutifs de la première pluralité de cylindres de moteur ou de trois cylindres de mise à feu consécutifs de la deuxième pluralité de cylindres de moteur.

6. Moteur à combustion interne à deux temps selon l'une quelconque des revendications 1-5, **caractérisé en ce que** le quatrième groupe se compose de trois cylindres de mise à feu consécutifs dont le premier et le troisième cylindre de mise à feu proviennent de la deuxième pluralité de cylindres de moteur et le deuxième cylindre de mise à feu provient de la première pluralité de cylindres de moteur ou de la troisième pluralité de cylindres de moteur.

7. Moteur à combustion interne à deux temps selon l'une quelconque des revendications 1 5, **caractérisé en ce que** le quatrième groupe se compose de deux cylindres de mise à feu consécutifs de la deuxième pluralité de cylindres de moteur ou de la troisième pluralité de cylindres de moteur.

8. Moteur à combustion interne à deux temps selon l'une quelconque des revendications 1, 2, 3, 4, 6 ou 7, **caractérisé en ce que** le cinquième groupe a trois cylindres de mise à feu consécutifs dont au moins un provient de la deuxième pluralité de cylindres de moteur.

9. Moteur à combustion interne à turbocompresseur deux temps selon la revendication 8, **caractérisé en ce que** le cinquième groupe a deux cylindres de la deuxième pluralité de cylindres de moteur.

10. Moteur à combustion interne à deux temps selon l'une quelconque des revendications 1, 2, 3, 4, 6 ou 7, **caractérisé en ce que** le cinquième groupe se compose de deux cylindres de mise à feu consécutifs de la troisième pluralité de cylindres de moteur.

11. Moteur à combustion interne à deux temps selon les revendications 1 et 10, **caractérisé en ce que** l'ordre de mise à feu (n1 - n15) des quinze cylindres lointains comprend un sixième groupe de deux cylindres de mise à feu consécutifs de la troisième pluralité dite de cylindres de moteur.

12. Moteur à combustion interne à deux temps selon la revendication 1, **caractérisé en ce que** les premiers six cylindres dans l'ordre de mise à feu proviennent de deux cylindres de la première pluralité de cylindres de moteur suivis par deux cylindres de la troisième pluralité de cylindres de moteur suivis par un cylindre de la deuxième pluralité de cylindres de moteur suivis par un premier cylindre de la pluralité de cylindres de moteur.

13. Moteur à combustion interne à deux temps selon la revendication 1, **caractérisé en ce que** les premiers deux cylindres dans l'ordre de mise à feu proviennent des deux premiers cylindres de la pluralité de cylindres de moteur, et que les cinq derniers cylindres dans l'ordre de mise à feu proviennent de deux cylindres de la première pluralité de cylindres de moteur suivis par un cylindre de la deuxième pluralité des derniers cylindres de moteur suivis par un cylindre de la troisième pluralité de cylindres de moteur sont suivi par un cylindre de la deuxième pluralité de cylindres de moteur.

14. Moteur à combustion interne à deux temps selon la revendication 2, **caractérisé en ce qu'**il i n'y a pas plus de deux groupes qui ont deux cylindres de mise à feu consécutifs de la première pluralité de cylindres de moteur.

15. Moteur à combustion interne à deux temps selon l'une quelconque des revendications 1, 2, 3, 4, 6, 7, 8, 9, 10, 11 et 12, **caractérisé en ce qu'**aucun des groupes dans l'ordre de mise à feu comprend trois cylindres de mise à feu consécutifs de la première pluralité dite, de la deuxième pluralité dite ou de la troisième pluralité dite de cylindres de moteur.
